# EUROPEAN PATENT APPLICATION

(11) **EP 2 770 425 A2**
(43) Date of publication of application: **27.08.2014**
(21) Application number: 14151988.4
(22) Date of filing: 21.01.2014
(51) Int. Cl.: G06F 3/12

(54) **Image processing apparatus and control method**

(30) Priority: 22.02.2013 JP 2013032737
(71) Applicant: Brother Kogyo Kabushiki Kaisha, Nagoya, Aichi 467-8561 (JP)
(72) Inventor: Nagai, Shohei, Nagoya, Aichi 467-8562 (JP)
(74) Representative: Smith, Samuel Leonard

(57) **Abstract**

An image processing apparatus includes a communicator, an image processor, and a controller. The communicator is configured to perform communication with a server. The image processor is configured to perform image processing. The controller is configured to perform: a login process of establishing a login state that allows execution of a specific job that causes the image processor to perform image processing and that causes the communicator to perform communication with the server; a sign-in process of establishing a sign-in state that allows use of the server; a job execution process of executing the specific job on condition that a current state is the login state and the sign-in state; and a cancel process of cancelling the login state and of cancelling the sign-in state when a logout condition for cancelling the login state is satisfied in a state where the sign-in state is not cancelled.

## Description

### CROSS REFERENCE TO RELATED APPLICATIONS

This application claims priority from Japanese Patent Application No. 2013-032737 filed February 22, 2013. The entire content of the priority application is incorporated herein by reference.

### TECHNICAL FIELD

The invention relates to an image processing apparatus that executes a job of performing communication with a server and to a control method thereof.

### BACKGROUND

Conventionally, there is known technology that an image processing apparatus connected to a server executes a job of performing communication with the server, such as downloading and printing image data stored in the server, uploading read image data to the server, and the like. There is also known technology that, when an image processing apparatus uses a server, a sign-in state is established between the image processing apparatus and the server, the sign-in state being a state that allows the image processing apparatus to use the server.

### SUMMARY

The technology of executing a job using a server on the image processing apparatus is disclosed. In the print system, a print job is preliminarily stored in a server. An image processing apparatus selects the print job stored in the server, and downloads the selected print job to the apparatus itself and executes the print job.

However, in the image processing apparatus that executes the above-described job of performing communication with the server, when a sign-in state needs to be established, the following problem arises. That is, some servers do not allow use from a plurality of devices for the same user account, or limit the number of devices for which use is allowed at the same time. Hence, if the sign-in state is kept even after execution of a job is completed, it is difficult for other devices to acquire usage permission.

In view of the foregoing, it is an object of the invention to provide an image processing apparatus that executes a job of performing communication with a server and that cancels a sign-in state at appropriate timing.

In order to attain the above and other objects, the invention provides an image processing apparatus. The image processing apparatus includes a communicator, an image processor, and a controller. The communicator is configured to perform communication with a server. The image processor is configured to perform image processing. The controller is configured to perform: a login process of establishing a login state that allows execution of a specific job that causes the image processor to perform image processing and that causes the communicator to perform communication with the server; a sign-in process of establishing a sign-in state that allows use of the server; a job execution process of executing the specific job on condition that a current state is the login state and the sign-in state; and a cancel process of cancelling the login state and of cancelling the sign-in state when a logout condition for cancelling the login state is satisfied in a state where the sign-in state is not cancelled.

In the image processing apparatus, when the login state is cancelled, execution of a specific job is not permitted, and there is low possibility that the server is used. Hence, there is little inconvenience for the user even if the sign-in state is cancelled in conjunction with cancellation of the login state. Cancelling the sign-in state in conjunction with cancellation of the login state decreases the number of devices or the user accounts that are in the sign-in state with the server at the same time. As a result, other devices can use the server more easily.

Preferably, the controller is configured to perform: a reception process of receiving input of whether to cancel the sign-in state, when the logout condition is satisfied in the state where the sign-in state is not cancelled; and cancelling the sign-in state in the cancel process on condition that input of cancelling the sign-in state is received in the reception process. If the sign-in state is cancelled automatically, there is a possibility that the user gets frustrated. Hence, it is preferable to perform cancellation of the sign-in state in conjunction with cancellation of the login state, after receiving input of whether to cancel the sign-in state and obtaining the user's consent.

Preferably, the controller is configured to perform: a setting process of setting whether to cancel the sign-in state in conjunction with cancellation of the login state; and, when the logout condition is satisfied in the state where the sign-in state is not cancelled, cancelling the sign-in state in the cancel process on condition that it is so set that the sign-in state is to be cancelled. It is possible to preliminarily set cancellation of the sign-in state in conjunction with cancellation of the login state, which improves convenience.

Preferably, when the logout condition is satisfied in the state where the sign-in state is not cancelled and when the sign-in state is established for a plurality of servers, the controller is configured to cancel one or a plurality of the sign-in state of the plurality of servers in the cancel process. When a plurality of sign-in states is established, the plurality of sign-in states can be cancelled all together, which improves convenience.

More preferably, when the logout condition is satisfied in the state where the sign-in state is not cancelled and when the sign-in state is established for the plurality of servers, the controller is configured to receive selection of a server, out of the plurality of servers, for which the sign-in state is to be cancelled and is configured to cancel the sign-in state of a selected server in the cancel process. When a plurality of sign-in states is established, it is possible to select a server for which the sign-in state is to be cancelled in conjunction with cancellation of the login state, which improves convenience.

Preferably, when the logout condition is satisfied in the state where the sign-in state is not cancelled and when the specific job is being executed, the controller is configured to, in the cancel process, cancel the sign-in state after finishing execution of the specific job. If execution of the specific job is discontinued in the middle, the user is likely to become frustrated. Hence, it is preferable to cancel the sign-in state after the specific job is completed.

Preferably, the controller further stores linking information that sets whether to cancel the sign-in state in conjunction with cancellation of the login state.

Preferably, the image processing apparatus further includes an operating unit that can be operated by a user. The logout condition includes at least one of conditions that a logout request is inputted through an input operation on the operating unit, that a duration period of the login state is longer than or equal to a threshold, and that a non-use period of the image processing apparatus is longer than or equal to another threshold.

According to another aspect, the invention provides an image processing apparatus. The image processing apparatus includes a communicator, an image processor, and a controller. The communicator is configured to perform communication with a server. The image processor is configured to perform image processing. The controller is configured to perform: a login process of establishing a login state that allows execution of a specific job that causes the image processor to perform image processing and that causes the communicator to perform communication with the server; a sign-in process of establishing a sign-in state that allows use of the server; a job execution process of executing the specific job on condition that a current state is the login state and the sign-in state; a reception process of receiving input of whether to cancel the sign-in state, when a logout condition for cancelling the login state is satisfied in a state where the sign-in state is not cancelled; and a cancel process of cancelling the sign-in state on condition that input of cancelling the sign-in state is received in the reception process.

According to still another aspect, the invention provides a method of controlling an image processing apparatus. The method includes: establishing a login state that allows execution of a specific job relating to image processing and communication with a server; establishing a sign-in state that allows use of the server; executing the specific job on condition that a current state is the login state and the sign-in state; and cancelling the login state and cancelling the sign-in state when a logout condition for cancelling the login state is satisfied in a state where the sign-in state is not cancelled.

Preferably, the method further includes receiving input of whether to cancel the sign-in state, when the logout condition is satisfied in the state where the sign-in state is not cancelled. The cancelling step includes cancelling the sign-in state on condition that input of cancelling the sign-in state is received in the receiving step.

Preferably, the method further includes setting whether to cancel the sign-in state in conjunction with cancellation of the login state. The cancelling step includes, when the logout condition is satisfied in the state where the sign-in state is not cancelled, cancelling the sign-in state on condition that it is so set that the sign-in state is to be cancelled.

Preferably, the cancelling step includes, when the logout condition is satisfied in the state where the sign-in state is not cancelled and when the sign-in state is established for a plurality of servers, cancelling one or a plurality of the sign-in state of the plurality of servers.

More preferably, the cancelling step further includes, when the logout condition is satisfied in the state where the sign-in state is not cancelled and when the sign-in state is established for the plurality of servers, receiving selection of a server, out of the plurality of servers, for which the sign-in state is to be cancelled and cancelling the sign-in state of a selected server.

Preferably, the cancelling step includes, when the logout condition is satisfied in the state where the sign-in state is not cancelled and when the specific job is being executed, cancelling the sign-in state after finishing execution of the specific job.

According to the invention, in an image processing apparatus that executes a job of performing communication with a server, technology of cancelling a sign-in state at appropriate timing is achieved.

### BRIEF DESCRIPTION OF THE DRAWINGS

Embodiments in accordance with the invention will be described in detail with reference to the following figures wherein:
Fig. 1 is a block diagram showing the configuration of an image processing system and the electrical configuration of a multifunction peripheral (MFP) according to an embodiment;
Fig. 2 is a schematic view showing the operation of the image processing system according to the embodiment;
Fig. 3 is a view showing the configuration of a user registration table in the MFP;
Fig. 4 is a view showing the configuration of a user management table in a cloud server;
Fig. 5 is a flowchart showing the steps of a login management process executed by the MFP according to the embodiment;
Fig. 6 shows a cloud-server selection screen displayed by the MFP; and
Fig. 7 is a flowchart showing the steps of a server management process executed by the MFP according to the embodiment.

### DETAILED DESCRIPTION

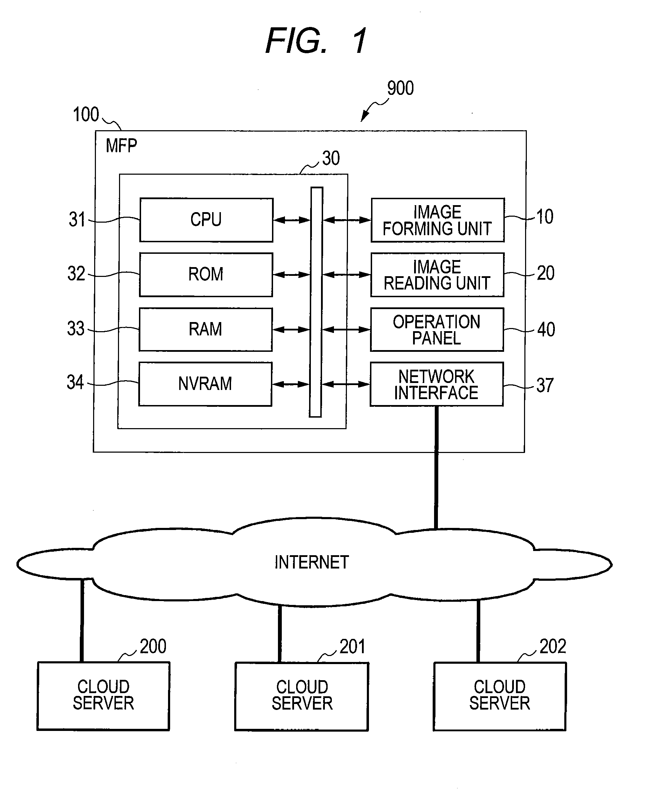

An image processing system according to an embodiment will be described in detail while referring to Figs. 1 through 7. In the present embodiment, the invention is applied to a multifunction peripheral (MFP) that is connected to an image processing system having a cloud server and that has a plurality of functions relating to image processing. Here, the cloud server is a virtual server in the idea of cloud computing, and is a server that can be operated through a WEB browser.

### [Configuration of image processing system]

As shown in Fig. 1, an image processing system 900 of the present embodiment includes an MFP 100 (an example of the image processing apparatus) and a plurality of cloud servers 200 (an example of the server), 201, and 202. The cloud servers 200, 201, and 202 store print data that is a print subject, and provide a service of transmitting the print data to the MFP 100 and a service of receiving scanned data read by the MFP 100 and storing the scanned data in a memory of the cloud server itself.

Although the image processing apparatus connected to the cloud servers 200, 201, and 202 is not limited to the MFP 100, Fig. 1 only illustrates the MFP 100 for simplicity. Further, although the cloud server connected to the MFP 100 is not limited to the cloud servers 200, 201, and 202, Fig. 1 only illustrates the cloud servers 200, 201, and 202 for simplicity. Further, in the following descriptions, controls between the MFP 100 and the cloud server 200 are mainly described, and controls between the MFP 100 and the other cloud servers 201 and 202 are omitted except where needed.

### [Configuration of MFP]

Next, the schematic configuration of the MFP 100 will be described. As shown in Fig. 1, the MFP 100 includes a CPU 31 (an example of the controller), a ROM 32, a RAM 33, and an NVRAM (non-volatile RAM) 34. The MFP 100 includes an image forming unit 10 (an example of the image processor) that prints an image on paper, an image reading unit 20 (an example of the image processor) that reads (scans) an image on an original document, an operation panel 40 having both a displaying function and a inputting function, and a network interface 37 (an example of the communicator). These units are controlled by the CPU 31.

The image forming unit 10 may be a type capable of color printing, or may be a type only capable of monochromatic printing. In the present embodiment, the image forming unit 10 is a type capable of color printing. As to the printing method, the image forming unit 10 may be of an electro-photographic method or may be of an inkjet method. Further, the image reading unit 20 may be a type capable of color scan, or may be a type only capable of monochromatic scan. In the present embodiment, the image reading unit 20 is a type capable of color scan. Also, the reading mechanism may be CCD or CIS.

The ROM 32 stores firmware that is a control program for controlling the MFP 100, various settings, default values, and the like. The RAM 33 and the NVRAM 34 are used as work areas to which various control programs are read out, or as storage areas in which data is stored temporarily.

The CPU31 controls each element of the MFP 100, while storing the processing results in the RAM 33 and the NVRAM 34 in accordance with the control programs read out from the ROM 32 and signals sent from various sensors.

The network interface 37 is an interface that enables communication with external devices such as the cloud server 200. The MFP 100 performs transmission/reception of data or command to/from the external devices via the network interface 37.

The operation panel 40 is provided at the exterior of the MFP 100. The operation panel 40 has various buttons for receiving user input and a touch panel for displaying messages and settings. The various buttons include, for example, an OK button for inputting a start instruction of image processing and a cancel button for inputting a cancel instruction of image processing. Further, the touch panel enables the user to touch for various inputs. For example, various settings and user information are inputted through the touch panel.

### [Operations of image processing system]

### [Execution of cloud job]

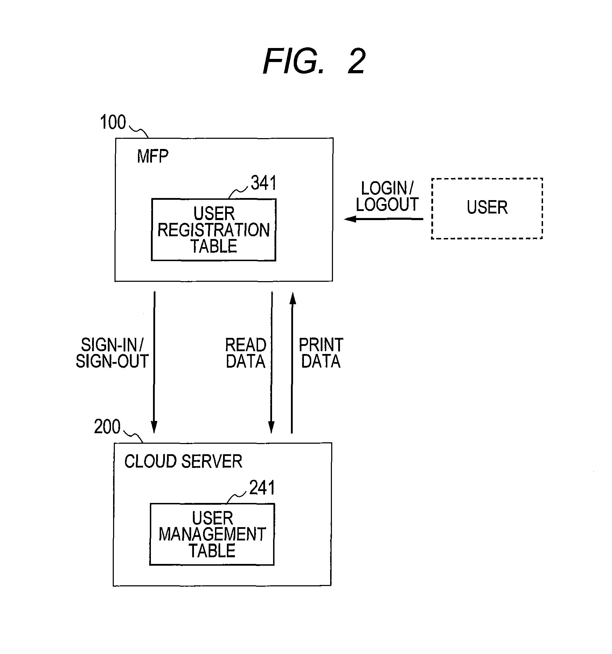

Next, the steps of executing a cloud job will be described while referring to Fig. 2. The cloud job is a job for performing image processing on the MFP 100 while utilizing the cloud server 200. The cloud job includes, for example, a print job of downloading print data from the cloud server 200 and controlling the image forming unit 10 to perform printing, and a reading job (scanning job) of uploading, to the cloud server 200, scanned data that is obtained by controlling the image reading unit 20 to perform reading (scanning).

In order to use the cloud server 200, the MFP 100 needs to obtain usage permission from the cloud server 200. In the present embodiment, a state in which the MFP 100 has obtained usage permission from the cloud server 200 is referred to as "sign-in state". An operation for establishing the sign-in state is referred to as "sign-in". An operation for cancelling the sign-in state is referred to as "sign-out".

Further, the MFP 100 needs user authentication in order to execute a job. In the present embodiment, a state in which user authentication on the MFP 100 is successful and execution of a job is permitted is referred to as "login state". An operation for establishing the login state is referred to as "login". An operation for cancelling the login state is referred to as "logout".

As described above, in order for the MFP 100 to execute a cloud job, both the login state and the sign-in state need to be preliminarily established. Thus, first, the user who wishes to input a cloud job logs in to the MFP 100.

Specifically, the MFP 100 receives a login request through an input operation onto the operation panel 40 by the user. Upon receiving the login request, the MFP 100 displays, on the operation panel 40, a screen for inputting login information needed for login. The login information includes at least information that identifies the user. In the present embodiment, a user name and a password are inputted.

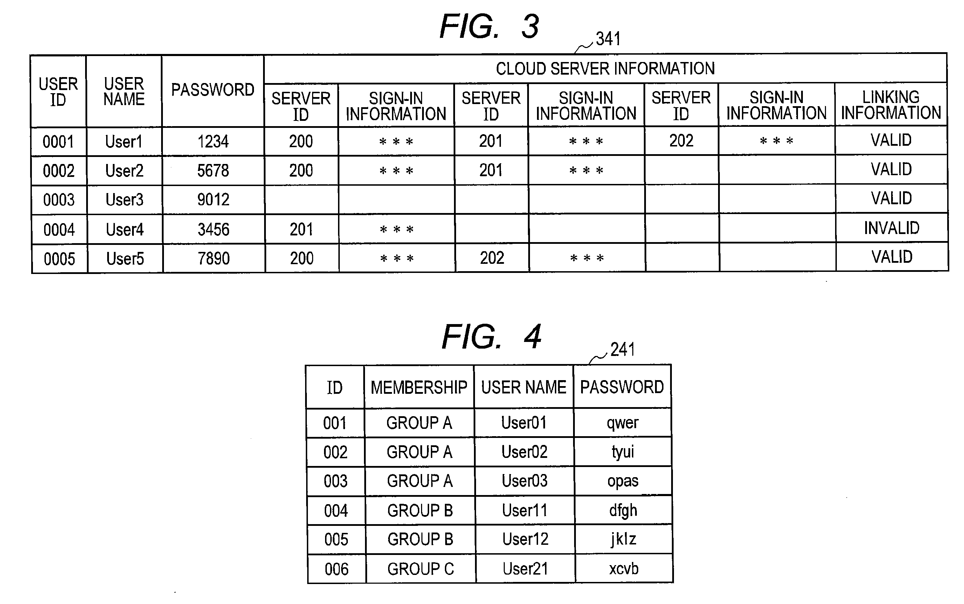

The MFP 100 has a user registration table 341 shown in Fig. 3, as information for performing user authentication. The user registration table 341 stores a record including four items of a user identification number (user ID), a user name, a password, and cloud server information. The cloud server information includes a server identification number (server ID), sign-in information needed for sign-in to the cloud server corresponding to the server ID, and linking information having a setting of whether linking sign-out is valid. Here, the linking sign-out is a process of cancelling the sign-in state in conjunction with cancellation of the login state. Addition and change of a record to the user registration table 341 is performed by an administrator who manages the MFP 100, for example.

The configuration of the record of the user registration table 341 is not limited to the one described above, and the record may include another item. Further, the record only needs to include information that can identify the user, and does not need to include all of the user ID, the user name, and the password. Also, the configuration of the cloud server information is not limited to the one described above, and may include another item.

Upon input of login information by the user, the MFP 100 refers to the user registration table 341, and searches for a record of which the user name and the password match the inputted login information. If such a record is found, the MFP 100 determines that user authentication is successful. If no such record is found, the MFP 100 determines that user authentication fails. When it is determined that user authentication is successful, the MFP 100 establishes a login state. Once the login state is established, the MFP 100 sets a state so that a job can be received.

After the login state is established, the user who wishes to input a cloud job signs in the cloud server 200. Specifically, the MFP 100 receives selection of the cloud server to be used for the cloud job, through input operation on the operation panel 40 by the user. Due to selection of the cloud server, a server usage request is inputted to the MFP 100.

After the server usage request is inputted, the MFP 100 controls the operation panel 40 to display a screen for inputting sign-in information that is needed for sign-in on the selected cloud server 200. The sign-in information at least includes information that identifies the user. In the present embodiment, membership, a user name, and a password are inputted. Here, if the user selects the cloud server for which sign-in information is stored as the cloud server information of the user registration table 341, the MFP 100 may read out the sign-in information so that input of the sign-in information by the user is omitted. After acquiring the sign-in information, the MFP 100 transmits a sign-in request to the selected cloud server. The sign-in request includes the acquired sign-in information.

On the other hand, the cloud server 200 has a user management table 241 shown in Fig. 4, as information for performing user authentication. The user management table 241 stores records each including four items of a user identification number (user ID), membership, a user name, and a password. Here, the configuration of the record of the user management table 241 is not limited to the one described above, and the record may include another item. Further, the record only needs to include information that can identify the user, and does not need to include all of the user ID, the membership, the user name, and the password.

Upon receiving a sign-in request from the MFP 100, the cloud server 200 refers to the user management table 241, and searches for a record of which all of the membership, the user name, and the password match the sign-in information included in the sign-in request. If such a record is found, the cloud server 200 determines that user authentication is successful. If no such record is found, the cloud server 200 determines that user authentication fails. The cloud server 200 permits the sign-in state to a plurality of devices, and has a maximum number of devices to which permission is given at the same time. Further, the cloud server 200 does not permit the sign-in state of a plurality of devices for the same user account. Hence, the cloud server 200 establishes the sign-in state with MFP 100 on condition that it is determined that user authentication is successful, that the number of devices to which permission is currently given is smaller than the maximum number, and that no permission is currently given to the authenticated user.

Upon establishing the sign-in state, the cloud server 200 permits the MFP 100 to use the cloud server 200 itself. Further, upon establishing the sign-in state, the cloud server 200 increments a counter that manages the number of devices to which permission is currently given. Also, the cloud server 200 adds the user ID for which the sign-in state is established, to a list that manages user accounts that are currently in the sign-in state.

After establishing both the login state and the sign-in state, the user who wishes to input a cloud job instructs the MFP 100 to execute a cloud job. If the cloud job is a print job, the MFP 100 starts reception of print data from the cloud server 200, and the MFP 100 controls the image forming unit 10 to print the received print data. If the cloud job is a reading job, the MFP 100 controls the image reading unit 20 to start reading of an original document, and transmits the read (scanned) data to the cloud server 200. The transmitted scanned data is stored in the cloud server 200.

After finishing execution of the cloud job, the user performs an input operation on the operation panel 40 to select the cloud server to sign out. After the cloud server to sign out is selected, the MFP 100 transmits a sign-out request to the selected cloud server. Upon receiving the sign-out request from the MFP 100, the selected cloud server (here, the cloud server 200) cancels the sign-in state with the MFP 100.

Upon cancelling the sign-in state, the cloud server 200 decrements the counter that manages the number of devices to which permission is currently given. Further, the cloud server 200 deletes the user ID for which the sign-in state is cancelled, from the list that manages user IDs that are currently in the sign-in state.

After finishing execution of the cloud job, the user performs an input operation on the operation panel 40 to input a logout request. Upon receiving the logout request, the MFP 100 cancels the login state. Once the login state is cancelled, the MFP 100 does not receive a new job.

Further, if there is still a cloud server for which the sign-in state remains established at the time of cancelling the login state, the MFP 100 cancels the sign-in state with the cloud server as necessary. This prevents the sign-in state with the cloud server from being maintained unnecessarily. The detailed steps of signing out in conjunction with logout will be described later.

### [Login management process]

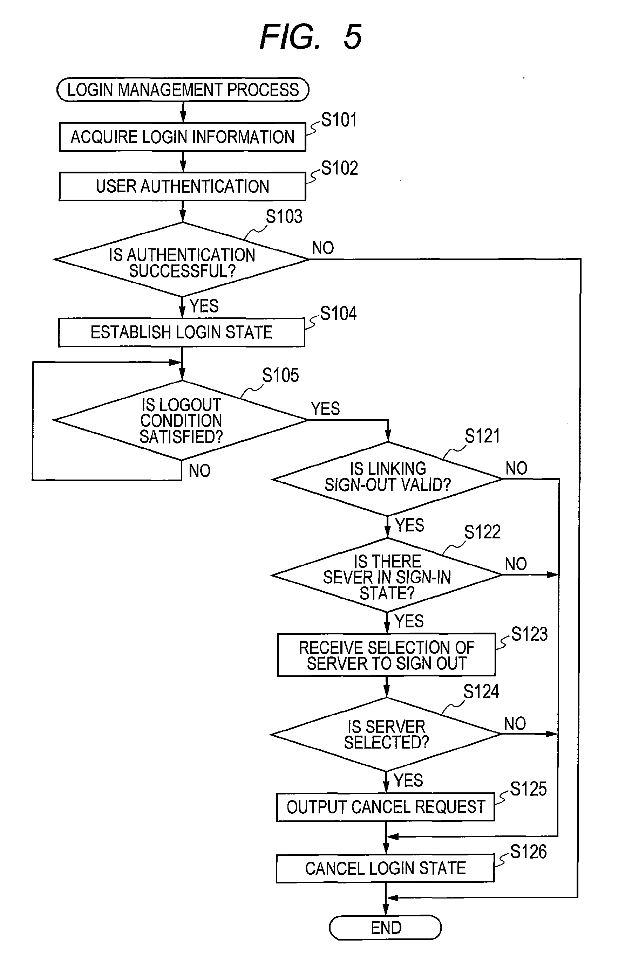

Next, various processes executed by the MFP 100 for realizing the above-described operations of the image processing system 900 will be described. First, a login management process for managing the login state will be described while referring to the flowchart of Fig. 5. The CPU 31 executes the login management process, triggered by input of a login request.

In the login management process, first, the CPU 31 controls the operation panel 40 to display a screen for inputting login information, and acquires the login information inputted by the user (S101). Then, the CPU 31 performs user authentication based on the inputted login information (S102). That is, the CPU 31 refers to the user registration table 341, and determines whether there is a record of which the user name and the password match the inputted login information.

Next, the CPU 31 determines whether user authentication is successful (S103). If user authentication fails, that is, if there is no record of which the user name and the password match the inputted login information in the user registration table 341 (S103: NO), the CPU 31 ends the login management process without establishing the login state.

If user authentication is successful, that is, if there is a record of which the user name and the password match the inputted login information in the user registration table 341 (S103: YES), the CPU 31 establishes the login state (S104). Specifically, in S104, the CPU 31 enables reception of a job and selection of a cloud server.

Next, the CPU 31 determines whether a logout condition is satisfied (S105). The logout condition includes, for example, that a logout request is inputted through an input operation on the operation panel 40 by the user, that a duration period of the login state is longer than or equal to a threshold, and that a non-use period of the MFP 100 is longer than or equal to another threshold. If the logout condition is not satisfied (S105: NO), the CPU 31 stands by until the logout condition is satisfied.

If the MFP 100 receives a job during a period after the login state is established and before the logout condition is satisfied, the CPU 31 executes the job. Further, if the MFP 100 receives input of the server usage request during this period, the CPU 31 executes a server management process described later.

On the other hand, if the logout condition is satisfied (S105: YES), the CPU 31 determines whether the setting of linking sign-out is valid (S121). The MFP 100 stores a setting of whether the linking sign-out is valid in the cloud server information of the user registration table 341. If the setting of linking sign-out is invalid (S121: NO), the CPU 31 cancels the login state without changing the sign-out state (S126).

If the setting of linking sign-out is valid (S121: YES), the CPU 31 determines whether there is at least one cloud server for which the sign-in state is established (S122). If there is no cloud server for which the sign-in state is established (S122: NO), the CPU 31 cancels the login state since there is no cloud server for which the sign-out state is to be changed (S126).

If there is at least one cloud server for which the sign-in state is established (S 122: YES), the CPU 31 controls the operation panel 40 to display a cloud-server selection screen for selecting the cloud server for which the sign-in state is to be cancelled, in order to receive selection of the cloud server for which the sign-in state is to be cancelled (S123).

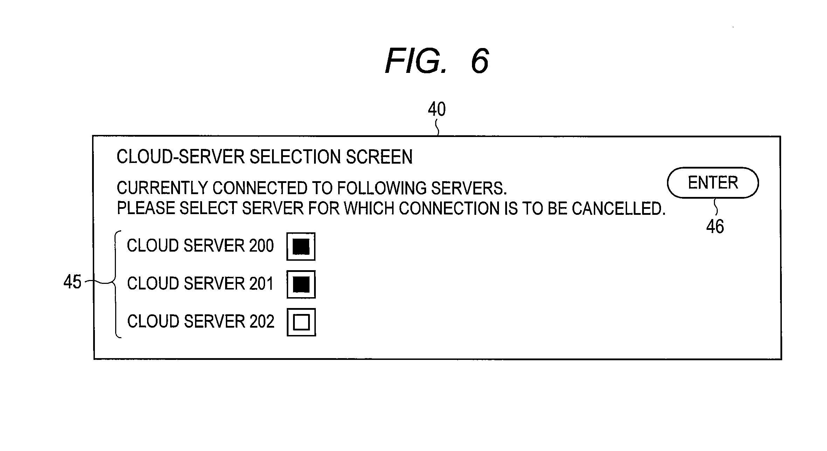

As shown in Fig. 6, the cloud-server selection screen includes a list display section 45 and an enter button 46. The list display section 45 displays names of cloud servers for which the sign-in state is currently established and check boxes for selecting whether to cancel the sign-in state, in association with each other. The enter button 46 is a button for confirming selection. When the enter button 46 is touched, the cloud server for which the check box is checked is selected from among the group of cloud servers displayed in the list display section 45. The check boxes for a plurality of cloud servers can be checked. When the plurality of check boxes is checked, the plurality of cloud servers is selected.

After the enter button 46 is touched, the CPU 31 determines whether at least one cloud server is selected (S124). If no cloud server is selected (S124: NO), the CPU 31 cancels the login state since there is no cloud server for which the sign-out state is to be changed (S126).

If at least one cloud server is selected (S124: YES), the CPU 31 outputs, to the MFP 100 itself, a cancel request for cancelling the sign-in state with the selected cloud server (S 125). The cancel request is received in a server management process described later and, in the server management process, a sign-out request is transmitted to the selected cloud server.

Subsequent to S125, the CPU 31 cancels the login state (S126). Specifically, in S126, the CPU 31 sets a state so that reception of a new job is not allowed. Subsequent to S126, the login management process ends. Again, the CPU 31 awaits input of a new login request.

### [Server management process]

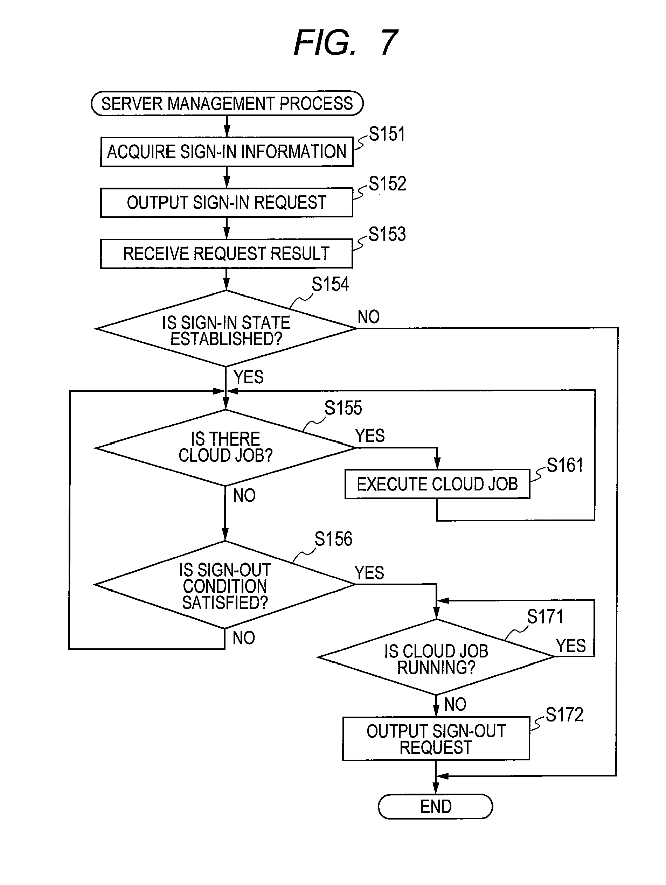

Next, a server management process of managing a connection state with the server will be described while referring to the flowchart of Fig. 7. The CPU 31 executes the server management process, triggered by reception of the server usage request. If a server usage request is made for each of different cloud servers, the server management process is executed for each request. Further, the server usage request includes information of the cloud server for which the sign-in state is to be established. In the following descriptions, it is assumed that the cloud server 200 is the server for which the sign-in state is to be established.

In the server management process, the CPU 31 acquires sign-in information (S151). In S151, the CPU 31 may control the operation panel 40 to display a screen for inputting the sign-in information so as to acquire the sign-in information from the user. Or, if the sign-in information is stored in the user registration table 341, the sign-in information may be read out from the user registration table 341.

Subsequent to S151, the CPU 31 outputs a sign-in request to the cloud server 200 (S152). The sign-in request includes the acquired sign-in information. Upon receiving the sign-in request, the cloud server 200 performs user authentication based on the sign-in information, and determines whether to establish the sign-in state. That is, the cloud server 200 refers to the user management table 241, and determines whether there is a record of which the membership, the user name, and the password match the inputted sign-in information. If such a record is found, the cloud server 200 establishes the sign-in state and informs the MFP 100 to that effect. If no such record is found, the cloud server 200 does not establish the sign-in state and informs the MFP 100 to that effect.

After outputting the sign-in request to the cloud server 200 in S152, the MFP 100 receives the result from the cloud server 200 (S153). Then, the CPU 31 determines whether the sign-in state is established successfully (S154). If the CPU 31 fails in establishment of the sign-in state (S154: NO), the server management process ends.

If the CPU 31 succeeds in establishment of the sign-in state (S154: YES), the CPU 31 determines whether a start request is received for a cloud job that performs communication with the cloud server 200 for which the sign-in state is established (S155). If the start request for a cloud job is received (S155: YES), execution of the cloud job is started (S161). Subsequent to S161, the process returns to S155.

If no start request for a cloud job is received (S155: NO), the CPU 31 determines whether a sign-out condition is satisfied (S156). The sign-out conditions include, for example, that a cancel request is inputted through an input operation on the operation panel 40 by the user, that the cancel request outputted in S125 of the login management process (Fig. 5) is received, and that a duration period of the sign-in state is longer than or equal to a threshold. If none of the sign-out conditions is satisfied (S156: NO), the process returns to S155.

If any one of the sign-out conditions is satisfied (S156: YES), the CPU 31 determines whether a cloud job is running (S171). If a job is discontinued in the middle, the user is likely to become frustrated. Hence, if a cloud job is running (S171: YES), the CPU 31 stands by until the cloud job is finished.

If no cloud job is running (S171: NO), the CPU 31 outputs a sign-out request to the cloud server 200 (S 172). Subsequent to S172, the server management process ends. Upon receiving the sign-out request from the MFP 100, the cloud server 200 cancels the sign-in state with the MFP 100.

As described above in detail, when the login state is cancelled, the MFP 100 of the present embodiment cancels the sign-in state with the cloud server 200 as necessary. When the login state is cancelled, because execution of a cloud job (an example of the specific job) is not permitted, there is low possibility that the cloud server 200 is used. Hence, there is little inconvenience for the user even if the sign-in state is cancelled in conjunction with cancellation of the login state. Cancelling the sign-in state in conjunction with cancellation of the login state decreases the number of devices or the user accounts that are in the sign-in state with the cloud server 200 at the same time. As a result, other devices can use the cloud server 200 more easily.

While the invention has been described in detail with reference to the above aspects thereof, it would be apparent to those skilled in the art that various changes and modifications may be made therein without departing from the scope of the claims.

For example, the image processing apparatus is not limited to an MFP, but may be applied to any apparatus having an image processing function, such as a scanner, a facsimile apparatus, a printer, a copier, and the like.

Although, in the embodiment, the user inputs the user information through the operation panel 40, the method of inputting the user information is not limited to this. For example, the MFP 100 may be provided with a reader of an IC (integrated circuit) tag or an IC card, so that the reader reads user information stored in the IC.

In the embodiment, as the condition of establishing the sign-in state, the MFP 100 determines three of user authentication, the number of devices that are currently permitted, and the user account that is currently permitted. However, this is merely one example, and it is not necessary to determine all of the three. Or, another condition may be added.

The MFP 100 of the embodiment stores the user registration table 341, which is information for establishing the login state, in the MFP 100 itself, and performs user authentication in the MFP 100 itself. However, the user registration table 341 may be stored in a different apparatus, and the MFP 100 may instruct the different apparatus to perform user authentication.

The MFP 100 of the embodiment executes a job on condition that it is in the login state, for all kinds of the jobs that are executed on the MFP 100. However, the MFP 100 may execute at least an image processing job and a job for performing communication with the cloud server, on condition that it is in the login state. Other jobs may be executed when it is not in the login state.

In the embodiment, the setting of linking sign-out is stored in the user registration table 341, as the setting for each user. However, the setting of linking sign-out may be stored separately from the user registration table 341, as the setting for the apparatus (that is, the MFP 100). Or, in another modification, it is not necessary to store setting of linking sign-out. In this case, determination in S121 is omitted, and the process moves to S 122 if there is a logout request (S105: YES).

In the embodiment, when performing linking sign-out, in S123, the cloud server for which the sign-in state is to be cancelled is selected from among the cloud servers in the sign-in state. However, steps S123 and S124 may be omitted, so that in S125 a sign-out request is inputted to all the cloud servers in the sign-in state. Further, for example, selection may be performed for the cloud server for which the sign-in state is to be cancelled if the logout request is inputted through an input operation on the operation panel 40 by the user, whereas the selection is not performed if the logout request is automatically inputted from the MFP 100 itself because the non-use period of the MFP 100 is longer than or equal to the threshold.

In the embodiment, management of the sign-in state with the cloud server is performed on the assumption that it is in the login state. However, sign-in may be performed prior to login. In this case, login is not prerequisite of sign-in.

In the embodiment, the cloud server does not permit the sign-in state of a plurality of devices for the same user account. However, the cloud server may permit the sign-in state of a plurality of devices for the same user account. In this case, at the time of performing linking sign-out, the MFP 100 may determine whether each cloud server in the sign-in state permits the sign-in state of a plurality of devices for the same user ID (referred to as "plurality-device-permitting cloud server"), and may exclude the plurality-device-permitting cloud server from the cloud server for which the sign-in state is to be cancelled.

The processes disclosed in the embodiment may be executed by hardware such as a single CPU, a plurality of CPUs, an ASIC etc., or a combination thereof. Further, the processes disclosed in the embodiment may be realized in various modes such as a recording medium storing program instructions for executing the processes, a method of executing the processes, and the like.

## Claims

1. An image processing apparatus comprising:
a communicator configured to perform communication with a server;
an image processor configured to perform image processing; and
a controller configured to perform:
a login process of establishing a login state that allows execution of a specific job that causes the image processor to perform image processing and that causes the communicator to perform communication with the server;
a sign-in process of establishing a sign-in state that allows use of the server;
a job execution process of executing the specific job on condition that a current state is the login state and the sign-in state; and
a cancel process of cancelling the login state and of cancelling the sign-in state when a logout condition for cancelling the login state is satisfied in a state where the sign-in state is not cancelled.

2. The image processing apparatus according to claim 1, wherein the controller is configured to perform:
a reception process of receiving input of whether to cancel the sign-in state, when the logout condition is satisfied in the state where the sign-in state is not cancelled; and
cancelling the sign-in state in the cancel process on condition that input of cancelling the sign-in state is received in the reception process.

3. The image processing apparatus according to claim 1 or 2, wherein the controller is configured to perform:
a setting process of setting whether to cancel the sign-in state in conjunction with cancellation of the login state; and
when the logout condition is satisfied in the state where the sign-in state is not cancelled, cancelling the sign-in state in the cancel process on condition that it is so set that the sign-in state is to be cancelled.

4. The image processing apparatus according to any one of claims 1 to 3, wherein, when the logout condition is satisfied in the state where the sign-in state is not cancelled and when the sign-in state is established for a plurality of servers, the controller is configured to cancel one or a plurality of the sign-in state of the plurality of servers in the cancel process.

5. The image processing apparatus according to claim 4, wherein, when the logout condition is satisfied in the state where the sign-in state is not cancelled and when the sign-in state is established for the plurality of servers, the controller is configured to receive selection of a server, out of the plurality of servers, for which the sign-in state is to be cancelled and is configured to cancel the sign-in state of a selected server in the cancel process.

6. The image processing apparatus according to any one of claims 1 to 5, wherein, when the logout condition is satisfied in the state where the sign-in state is not cancelled and when the specific job is being executed, the controller is configured to, in the cancel process, cancel the sign-in state after finishing execution of the specific job.

7. The image processing apparatus according to any one of claims 1 to 6, wherein the controller further stores linking information that sets whether to cancel the sign-in state in conjunction with cancellation of the login state.

8. The image processing apparatus according to any one of claims 1 to 7, further comprising an operating unit that can be operated by a user,
wherein the logout condition includes at least one of conditions that a logout request is inputted through an input operation on the operating unit, that a duration period of the login state is longer than or equal to a threshold, and that a non-use period of the image processing apparatus is longer than or equal to another threshold.

9. An image processing apparatus comprising:
a communicator configured to perform communication with a server;
an image processor configured to perform image processing; and
a controller configured to perform:
a login process of establishing a login state that allows execution of a specific job that causes the image processor to perform image processing and that causes the communicator to perform communication with the server;
a sign-in process of establishing a sign-in state that allows use of the server;
a job execution process of executing the specific job on condition that a current state is the login state and the sign-in state;
a reception process of receiving input of whether to cancel the sign-in state, when a logout condition for cancelling the login state is satisfied in a state where the sign-in state is not cancelled; and
a cancel process of cancelling the sign-in state on condition that input of cancelling the sign-in state is received in the reception process.

10. A method of controlling an image processing apparatus, the method comprising:
establishing a login state that allows execution of a specific job relating to image processing and communication with a server;
establishing a sign-in state that allows use of the server;
executing the specific job on condition that a current state is the login state and the sign-in state; and
cancelling the login state and cancelling the sign-in state when a logout condition for cancelling the login state is satisfied in a state where the sign-in state is not cancelled.

11. The method according to claim 10, further comprising:
receiving input of whether to cancel the sign-in state, when the logout condition is satisfied in the state where the sign-in state is not cancelled,
wherein the cancelling step comprises cancelling the sign-in state on condition that input of cancelling the sign-in state is received in the receiving step.

12. The method according to claim 10 or 11, further comprising:
setting whether to cancel the sign-in state in conjunction with cancellation of the login state,
wherein the cancelling step comprises, when the logout condition is satisfied in the state where the sign-in state is not cancelled, cancelling the sign-in state on condition that it is so set that the sign-in state is to be cancelled.

13. The method according to any one of claims 10 to 12, wherein the cancelling step comprises, when the logout condition is satisfied in the state where the sign-in state is not cancelled and when the sign-in state is established for a plurality of servers, cancelling one or a plurality of the sign-in state of the plurality of servers.

14. The method according to claim 13, wherein the cancelling step further comprises, when the logout condition is satisfied in the state where the sign-in state is not cancelled and when the sign-in state is established for the plurality of servers, receiving selection of a server, out of the plurality of servers, for which the sign-in state is to be cancelled and cancelling the sign-in state of a selected server.

15. The method according to any one of claims 10 to 14, wherein the cancelling step comprises, when the logout condition is satisfied in the state where the sign-in state is not cancelled and when the specific job is being executed, cancelling the sign-in state after finishing execution of the specific job.
